Europäisches Patentamt

European Patent Office

Office européen des brevets

(11) Publication number: **0 401 151**
**A2**

# EUROPEAN PATENT APPLICATION

(21) Application number: **90630072.8**

(51) Int. Cl.⁵: **F16B 37/04**

(22) Date of filing: **20.03.90**

(30) Priority: **01.06.89 US 359985**

(43) Date of publication of application:
**05.12.90 Bulletin 90/49**

(84) Designated Contracting States:
**DE ES FR GB IT**

(71) Applicant: **VSI CORPORATION**
**300 West Service Road**
**Chantilly, Virginia 22021-9998(US)**

(72) Inventor: **Warkentin, Roy L.**
**1964 West 259th Place**
**Lomita, California 90717(US)**

(74) Representative: **Weydert, Robert et al**
**OFFICE DENNEMEYER S.à.r.l. P.O. Box 1502**
**L-1015 Luxembourg(LU)**

(54) **Receptacle assembly.**

(57) The receptacle assembly for holding a receptacle (15) adjacent to a stud hole (19) formed in a substructure (13) is attached to the substructure (13) using merely a grommet (39) and a single fastener (33). The grommet (39) not only assists in securing the assembly (11) to the substructure (13), but also protects the substructure (13) from being damaged during insertion and removal of a stud (17).

FIG I

EP 0 401 151 A2

## BACKGROUND OF THE INVENTION

The present invention relates generally to receptacle assemblies of the kind that can be secured adjacent to holes formed in substructures and, more particularly, to receptacle assemblies of this kind particularly suited for use with substructures formed of composite materials.

Receptacle assemblies of this kind typically include a U-shaped cage or plate adapted to hold a receptacle, e.g., a nut, adjacent to a hole in the cage, through which a stud can pass. The receptacle assembly is typically secured to a substructure by fasteners, such as rivets, passing through additional holes in the cage and aligned holes in the substructure. Typical receptacle assemblies in the past have been mounted to the substructure using two rivets, to ensure that the receptacle assembly remains aligned with the stud hole in the substructure. Additionally, the rivets resist the push-out or torque-out loads applied to the receptacle assembly during use.

Special problems can arise when adapting such receptacle assemblies for use with substructures formed of composite materials. Composite materials are very lightweight and strong, which makes them useful in aircraft structures. However, substructures formed of such composite materials are greatly weakened by any holes that are placed in them. It is therefore important to limit the number of holes that are needed to attach a receptacle assembly to a composite substructure.

Composite substructures also are subject to wear in the area of the stud hole. Repeated insertion and removal of a stud in a hole in a composite substructure can fray the inside surface of the hole as well as the facing surface of the substructure, adjacent to the hole. This fraying can cause the composite material to delaminate, and the stud hole in the substructure can become enlarged or elongated, thus compounding the problem of the weakened substructure. Previous receptacle assemblies were not configured to alleviate this type of fraying.

Metallic substructures also are subject to wear in the area of the stud hole. Repeated insertion and removal of a stud in a hole in a metallic substructure can cause the hole to become enlarged or elongated. This alters the structural load-carrying characteristics of the substructure, and repairing the substructure can be costly and time consuming.

It should therefore be appreciated that there is a need for a receptacle assembly that can be mounted to a substructure using fewer holes, to avoid unnecessarily weakening the substructure, yet at the same time assure a proper alignment of the receptacle and a stud hole in the substructure. There also is a need for such assemblies to protect the stud hole from being frayed by repeated insertion and removal of a stud in the hole. The present invention fulfills these needs.

## SUMMARY OF THE INVENTION

The present invention is embodied in a receptacle assembly particularly adapted for use in securing a receptacle relative to a substructure, which minimizes any weakening of the substructure. In particular, the assembly includes a generally flat plate adapted for placement against the substructure and further includes means for holding a receptacle such as a nut. A stud hole is formed in the plate, in alignment with the receptacle, and a corresponding stud hole is formed in the substructure. In accordance with the invention, the receptacle assembly is secured to the substructure by the combination of a grommet extending through the aligned stud holes formed in the plate and the substructure and merely a single fastener extending through aligned fastener holes formed in the plate and the substructure. The receptacle assembly is thereby secured to the substructure in a way that reliably holds the receptacle in position to receive a stud, while requiring only two holes to be formed in the substructure.

In a more detailed feature of the invention, the grommet serves two functions, i.e., cooperating with the fastener to secure the receptacle assembly to the substructure and protecting the substructure from fraying or otherwise being damaged in the region of its stud hole. If the substructure is formed of a composite material the grommet helps prevent delamination by keeping the region about the stud hole in compression. The grommet is held in place by outwardly-projecting annular flanges at its opposite ends. One flange engages the substructure, and the other engages the receptacle plate. The flange that contacts the substructure protects the substructure's surface from chipping and other wear when studs are inserted through, and removed from, the stud hole. Because the stud is passed through the grommet, the stud never contacts the cylindrical surface of the substructure's stud hole, which avoids damaging and further weakening the substructure.

The fastener that extends through the aligned fastener holes in the receptacle plate and the substructure can engage the receptacle plate and the substructure in a similar way to the grommet, described above. Additionally, because the grommet and fastener are spaced from each other, the receptacle assembly is fixed to the substructure such that it cannot rotate about the stud hole. Eliminating this rotation assures that the receptacle stud hole and the receptacle will be aligned with the substructure stud hole.

Other features and advantages of the present invention will become apparent from the following description of the preferred embodiment, taken in conjunction with the accompanying drawings, which illustrate, by way of example, the principles of the invention.

BRIEF DESCRIPTION OF THE DRAWINGS

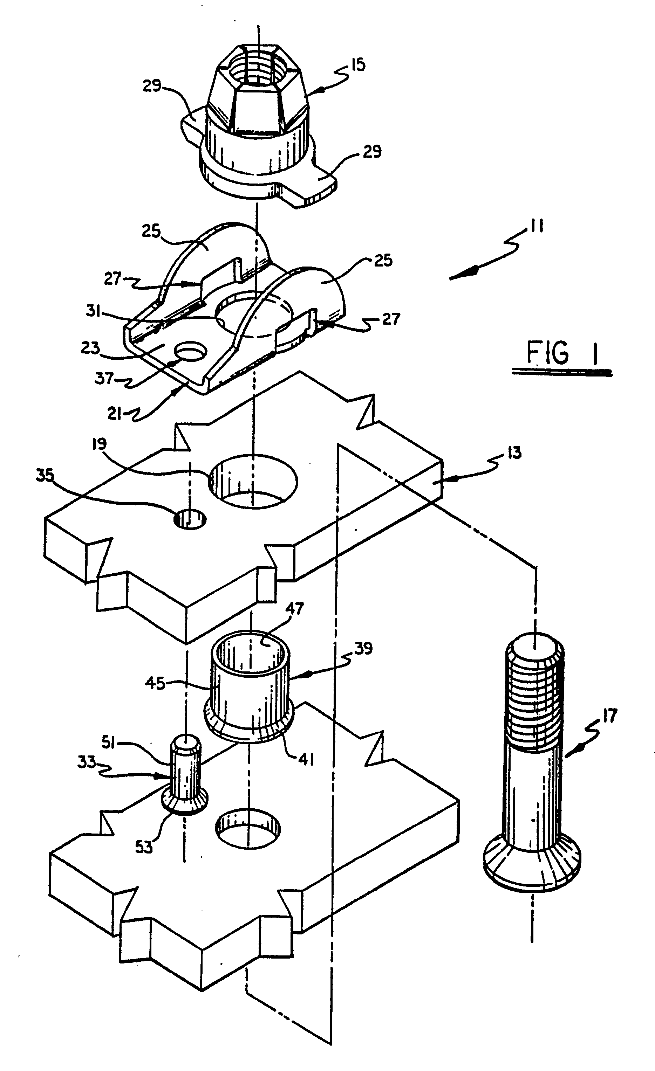

FIG. 1 is an exploded perspective view of a receptacle assembly embodying the invention, shown in relationship to a composite substructure and a stud.

FIG. 2 is a perspective view of the receptacle assembly of FIG. 1, shown in its assembled condition.

FIG. 3 is a sectional side view of the receptacle assembly, shown in FIG. 2.

DESCRIPTION OF THE PREFERRED EMBODIMENT

With reference to the drawings, there is shown a receptacle assembly 11 secured to a composite substructure 13, for holding a receptacle such as a lock nut 15 in a position to threadedly receive a stud 17 extending through a stud hole 19 in the substructure. The assembly includes a U-shaped cage 21, with a plate or base 23 and upstanding walls 25 at opposite sides of the base. Each wall includes an elongated slot 27 for receiving and retaining one of two tabs 29 projecting laterally from opposite sides of the receptacle 15. A stud hole 31 is formed in the base of the U-shaped cage, in axial alignment with the receptacle.

In the past, receptacle assemblies of this kind typically were secured to a substructure by a pair of fasteners, such as rivets, extending through aligned fastener holes in the substructure and the U-shaped cage, on opposite sides of the stud hole. That arrangement required three holes to be formed in the substructure, i.e., one stud hole and two fastener holes. This is an undesirable arrangement, because each hole significantly weakens the substructure.

In accordance with the invention, the receptacle assembly 11 is secured to the substructure 13 using merely a single fastener, e.g., a rivet 33, that extends through aligned fastener holes 35 and 37 in the respective substructure and U-shaped cage 21 and a grommet 39 that extends through the aligned stud holes 19 and 31 in the respective substructure and U-shaped cage. The rivet compressively engages and secures together the substructure and the U-shaped cage, while similarly the grommet includes outwardly projecting annular flanges 41 and 43 at its opposite ends for engaging and compressing together the substructure and the U-shaped cage. The assembly is thereby held securely against the substructure, with the receptacle 15 positioned to receive the 17 stud projecting through the stud holes. Only two holes therefore need to be formed in the substructure.

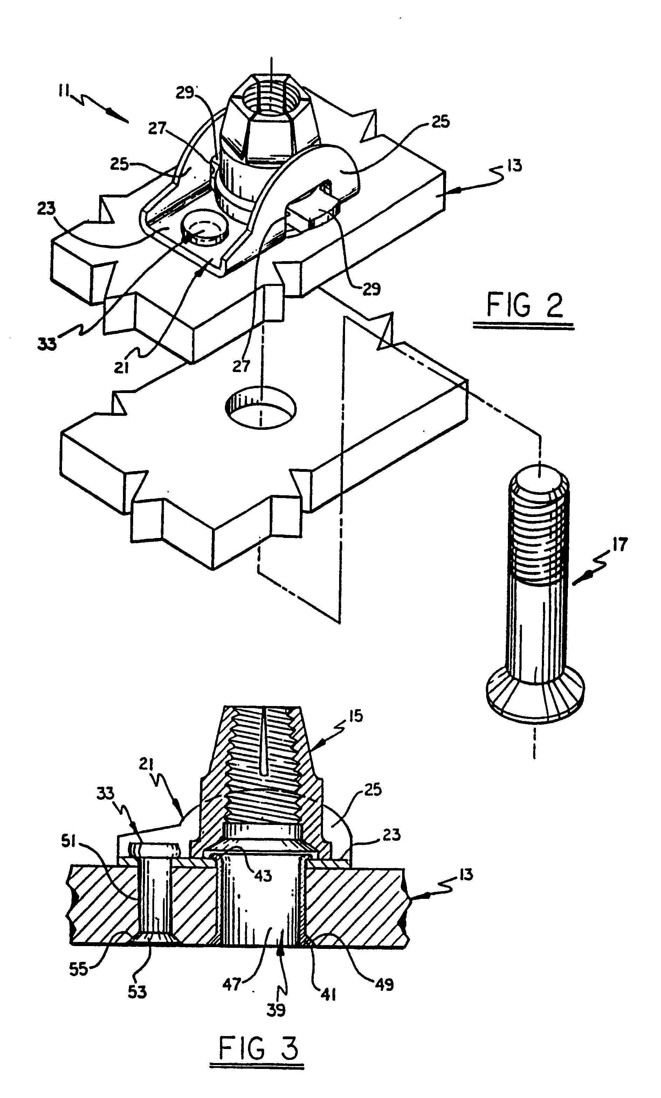

More particularly, the grommet 39 includes a tubular section 45 having an inside bore 47 and it is sized to extend through both the stud hole 19 in the composite substructure 13 and the stud hole 31 in the base 23 of the U-shaped cage 21. The outwardly-projecting flange 41 at one end of the tubular section engages the edge of the substructure surrounding the stud hole. This retains the grommet in place while its opposite end is flanged outwardly to form the flange 43 that engages the base of the U-shaped cage. When mounting the receptacle assembly, it is well known in the art to have one end of the grommet preflanged and it makes little difference which end is preflanged. As shown in FIG. 3, the stud hole also includes a countersink 49, to receive the flange 41 and thereby cause the substructure's outside surface to be smooth and flat. This countersink is, of course, an optional feature.

It is important to note that the stud hole 19 in the substructure 13 and the stud hole 31 in the base 23 of the U-shaped cage 21, as well as the grommet's inside bore 47, must all be sized to permit the stud 17 to pass through them. Because the stud passes through the grommet's inside bore, it will not engage the inside surface of the substructure's stud hole. This avoids any fraying or other weakening of the substructure material. Additionally, the grommet's flange 41 protects the outside of the substructure 13 from being damaged when the stud is being inserted through the hole. Further, since the grommet holds the composite substructure in compression, the possibility of the substructure delaminating is minimized.

The rivet 33 includes an elongated body 51 and a head 53. In use, the elongated body extends completely through the fastener holes 35 and 37 formed in the respective substructure 13 and base 23 of the U-shaped cage 21, while the head is retained by the substructure. The end of the rivet opposite the head is flared outwardly to engage the base of the cage and thereby retain the cage firmly against the substructure. The fastener hole 35 in the substructure can include a countersink 55 (FIG. 3) to receive the rivet head, thus allowing the outside surface of the substructure to be smooth and flat. This countersink is, of course, an optional feature.

The tabs 29 projecting laterally from the opposite sides of the receptacle 15 are sized to fit loosely within the slots 27 formed in the walls 25 of the U-shaped cage 21. This permits limited movement of the receptacle and thereby accommodates any slight misalignment between the receptacle and the stud holes 19 and 31.

It will be apparent from the foregoing description that the invention provides an improved receptacle assembly that can be secured to a substructure using merely a grommet and a single fastener, thus requiring only two holes to be formed in the substructure. This minimizes weakening of the substructure, and use of the grommet minimizes undesired fraying or other damage of the stud hole in the substructure.

While a particular form of the invention has been illustrated and described, it will be apparent that various modifications can be made without departing from the spirit and scope of the invention. Accordingly, the invention is defined only by the appended claims.

**Claims**

1. A receptacle assembly adapted for attachment to a substructure, comprising:
a receptacle;
receptacle retaining means including a generally flat plate with a stud hole and a single fastener hole formed therein, the plate being adapted to be placed against a substructure with its stud hole and fastener hole aligned respectively with a stud hole and a single fastener hole formed in the substructure, the receptacle retaining means further including means for retaining the receptacle in a prescribed position adjacent to the stud hole formed in the plate;
a fastener extending through the aligned fastener holes in the receptacle and the substructure; and
a grommet extending through the aligned stud holes in the receptacle and the substructure;
wherein the fastener and the grommet cooperate to secure the receptacle to the substructure without the need for additional holes being formed in the substructure.

2. The receptacle assembly of claim 1, wherein the receptacle retaining means includes means for limiting movement of the receptacle about the center of the substructure stud hole.

3. The receptacle assembly of claim 1, wherein:
the fastener is a rivet; and
the receptacle is a nut.

4. The receptacle assembly of claim 1, wherein the grommet comprises a tubular section and outwardly-projecting annular flanges at opposite ends of the tubular section for engaging and confining the plate and the substructure between them.

5. A receptacle assembly comprising:
a substructure having a stud hole and a fastener hole formed therein;
a receptacle;
receptacle retaining means including a generally flat plate with a stud hole and fastener hole formed therein, the plate being adapted to be placed against the substructure with its stud hole and fastener hole aligned respectively with the substructure's stud hole and fastener hole, the receptacle retaining means further including means for retaining the receptacle adjacent to the stud hole;
a fastener extending through the aligned fastener holes in the receptacle and the substructure; and
a grommet extending through the aligned stud holes in the receptacle and the substructure;
wherein the fastener and the grommet cooperate to secure the receptacle to the substructure without the need for additional holes being formed in the substructure.

6. The receptacle assembly of claim 6, wherein the receptacle retaining means includes means for limiting movement of the receptacle about the center of the substructure stud hole.

7. The nut receptacle assembly of claim 6, wherein:
the fastener is a rivet; and
the receptacle is a nut.

8. The receptacle assembly of claim 6, wherein the grommet includes outwardly-projecting annular flanges sized to project beyond the diameter of the substructure and plate stud holes and thereby engage and retain the plate on the substructure.

9. A receptacle assembly adapted for attachment to a substructure having a stud hole and a rivet hole formed therein, the assembly comprising:
a receptacle having two tabs projecting laterally from its opposite sides;
receptacle retaining means including a generally flat plate with a stud hole and a rivet hole formed therein, the plate being adapted to be placed against the substructure with its stud hole and rivet hole aligned respectively with the stud hole and rivet hole formed in the substructure, the receptacle retaining means further including first and second walls projecting upwardly from the plate, on opposite sides of the plate's stud hole, the walls having slots to loosely receive the two tabs of the receptacle;
a rivet extending through the aligned rivet holes in the receptacle and the substructure; and
a grommet extending through the aligned stud holes in the receptacle and the substructure, the grommet including a tubular section and outwardly-projecting annular flanges at opposite ends of the tubular section for engaging and confining the receptacle and substructure between them;

wherein the rivet and the grommet cooperate to secure the receptacle to the substructure without the need for additional holes being formed in the substructure.

FIG 1

FIG 2

FIG 3